# EUROPEAN PATENT APPLICATION

(11) **EP 4 756 307 A1**
(43) Date of publication of application: **10.06.2026**
(21) Application number: 24857815.5
(22) Date of filing: 30.04.2024
(51) Int. Cl.: F24F 11/89

(54) **OPERATION CONTROL METHOD AND APPARATUS FOR AIR CONDITIONER, DEVICE, AND STORAGE MEDIUM**

(30) Priority: 25.08.2023 CN 202311086731
(71) Applicant: GD Midea Air-Conditioning Equipment Co., Ltd., Foshan, Guangdong 528311 (CN)
(72) Inventor: LIU, Pu, Foshan, Guangdong 528311 (CN); TANG, Shanxuan, Foshan, Guangdong 528311 (CN); LIU, Ming, Foshan, Guangdong 528311 (CN); PANG, Min, Foshan, Guangdong 528311 (CN); WANG, Shaohua, Foshan, Guangdong 528311 (CN); FAN, Qifeng, Foshan, Guangdong 528311 (CN)
(74) Representative: RGTH
(86) International application number: PCT/CN2024/090952
(87) International publication number: WO 2025/044265

(57) **Abstract**

An operation control method comprises (S10) obtaining the operation data of the air conditioner during operation, (S20) determining an initial comfort level and an initial comfort curve of the air conditioner using a comfort level evaluation model based on the operation data, (S30) predicting based on the initial comfort curve and a target comfort curve set corresponding to the initial comfort level to obtain predicted operation data of the air conditioner, and (S40) controlling an operation state of the air conditioner at next moment according to the predicted operation data.

## Description

This application claims priority to Chinese Patent Application No. 202311086731.8, filed on August 25, 2023, the entire contents of which are incorporated herein by reference.

### TECHNICAL FIELD

The present application relates to the technical field of air conditioner, and more particularly to an operation control method for an air conditioner, an operation control apparatus for an air conditioner, an operation control device for an air conditioner, and a storage medium.

### BACKGROUND

In conventional technology, the comfort control technology during the operation of the air conditioner mainly has two major defects: biased control and control solidification. The main reasons for the two major defects mentioned above are the lack of quantitative standards for comfort control and the fact that the air conditioner control logic is derived from expert experience and experimental simulations, failing to consider user habits, thus resulting in low comfort levels during air conditioner operation, and failing to meet user needs.

The above content is for illustrative purposes only and does not constitute an admission that the above content is related art.

### SUMMARY

### TECHNICAL PROBLEM

The main purpose of the present application is to provide an operation control method for an air conditioner, an operation control apparatus for an air conditioner, an operation control device for an air conditioner, and a storage medium, aiming to solve the technical problem of low comfort levels during the operation control of air conditioners in the related art.

### TECHNICAL SOLUTION

To achieve the above purpose, the present application provides an operation control method for an air conditioner, the method comprising the following steps:
obtaining operation data of the air conditioner in response to the air conditioner being operating;
determining an initial comfort level and an initial comfort curve of the air conditioner using a trained comfort level evaluation model based on the operation data;
predicting according to the initial comfort curve and a target comfort curve set corresponding to the initial comfort level, and obtaining predicted operation data of the air conditioner; and
controlling an operation state of the air conditioner at next moment according to the predicted operation data.

In an embodiment, before the determining the initial comfort level and the initial comfort curve of the air conditioner using the trained comfort level evaluation model based on the operation data, the method further comprises:
generating a training sample set according to an operation data sample of the air conditioner and a comfort data sample of a comfort device; and
performing a model training using an initial comfort level prediction model based on the training sample set, and obtaining the trained comfort level evaluation model.

In an embodiment, the performing the model training using the initial comfort level prediction model based on the training sample set, and obtaining the trained comfort level evaluation model comprises:
performing the model training using an initial regression model based on the training sample set, and obtaining a first prediction model;
predicting a comfort level prediction value corresponding to the operation data sample according to the first prediction model;
calculating an error value between the comfort level prediction values and a comfort level actual value in the comfort data sample; and
performing the model training using the initial comfort level prediction model according to the operation data sample and the error value, and obtaining the trained comfort level evaluation model.

**In** an embodiment, before the predicting according to the initial comfort curve and the target comfort curve set corresponding to the initial comfort level, and obtaining the predicted operation data of the air conditioner, the method further comprises:
obtaining historical report data of the air conditioner;
performing a comfort level evaluation using the trained comfort level evaluation model according to the historical report data, and obtaining a historical initial comfort level and a corresponding historical comfort level curve; and
classifying the historical comfort level curve, and obtaining a comfort curve set.

In an embodiment, the performing the comfort level evaluation using the trained comfort level evaluation model according to the historical report data, and obtaining the historical initial comfort level and the corresponding historical comfort level curve comprises:
performing data cleaning and sampling on the historical report data, and obtaining a target historical report data; and
performing the comfort level evaluation using the trained comfort level evaluation model according to the target historical report data, and obtaining the historical initial comfort level and the corresponding historical comfort level curve.

In an embodiment, the classifying the historical comfort level curve, and obtaining the comfort curve set comprises:
obtaining an extreme value of the historical comfort level curve, an initial comfort level of the historical comfort level curve, and a curve similarity of the historical comfort level curve;
classifying the historical comfort level curve based on the extreme value, the initial comfort level, and the curve similarity, and obtaining the comfort curve set; and
preprocessing the comfort curve set to make each comfort level curve in the comfort curve set correspond to different comfort level initial value.

**In** an embodiment, the predicting according to the initial comfort curve and the target comfort curve set corresponding to the initial comfort level, and obtaining the predicted operation data of the air conditioner comprises:
calculating a similarity between the initial comfort curve and a target comfort level curve set;
determining a target predicted comfort level curve in the target comfort curve set according to the similarity; and
determining a predicted comfort level at the next moment and a predicted operation data of the air conditioner corresponding to the predicted comfort level based on the target predicted comfort level curve.

Furthermore, to achieve the above purposes, the present application further proposes an operation control apparatus for an air conditioner, comprising:
an acquisition module, configured to obtain operation data of the air conditioner in response to the air conditioner being operating;
a calculation module, configured to determine an initial comfort level and an initial comfort curve of the air conditioner using a trained comfort level evaluation model based on the operation data;
a prediction module, configured to predict according to the initial comfort curve and a target comfort curve set corresponding to the initial comfort level, and obtain predicted operation data of the air conditioner; and
a control module, configured to control an operation state of the air conditioner at next moment according to the predicted operation data.

Furthermore, to achieve the above purposes, the present application further proposes an operation control device for an air conditioner, comprising: a memory, a processor, and an operation control program for the air conditioner stored on the memory and executable on the processor, and the operation control program for the air conditioner is configured to implement the operation control method for the air conditioner as described above.

Furthermore, to achieve the above purposes, the present application further proposes a storage medium, the storage medium stores an operation control program for an air conditioner, and the operation control program for the air conditioner implements the operation control method for the air conditioner as described above when executed by a processor.

### TECHNICAL EFFECT

The present application discloses an operation control method for an air conditioner. The operation control method for the air conditioner comprises: obtaining operation data of the air conditioner in response to the air conditioner being operating; determining an initial comfort level and an initial comfort curve of the air conditioner using a trained comfort level evaluation model based on the operation data; predicting according to the initial comfort curve and a target comfort curve set corresponding to the initial comfort level, and obtaining predicted operation data of the air conditioner; and controlling an operation state of the air conditioner according to the predicted operation data. Compared with the related art, in the present application, by obtaining the operation data of the air conditioner during operation, using a trained comfort level evaluation model to perform comfort level evaluation according to the operation data of the air conditioner, and obtaining the initial comfort level and initial comfort curve of the air conditioner at the current moment; then, based on the initial comfort curve and the target comfort curve corresponding to the initial comfort level, predicting the operation data of the air conditioner at the next moment; finally, according to the predicted operation data, controlling the operation state of the air conditioner at the next moment, thereby avoiding the technical problem of low comfort level in the operation control process of the air conditioner, and improving the user experience.

### BRIEF DESCRIPTION OF THE DRAWINGS

FIG. 1 is a structural schematic view of an operation control device for an air conditioner in a hardware operating environment involved in an embodiment of the present application.
FIG. 2 is a schematic flow chart of a first embodiment of an operation control method for an air conditioner according to the present application.
FIG. 3 is a schematic flow chart of a second embodiment of an operation control method for an air conditioner according to the present application.
FIG. 4 is a schematic flow chart of a third embodiment of an operation control method for an air conditioner according to the present application.
FIG. 5 is a structural block diagram of the first embodiment of the operation control apparatus for the air conditioner according to the present application.

The realization of the purpose, functional features and advantages of the present application will be further described in conjunction with the embodiments and with reference to the accompanying drawings.

### DETAILED DESCRIPTION OF THE EMBODIMENTS

It should be understood that the specific embodiments described herein are only for explaining the present application and are not intended to limit the present application.

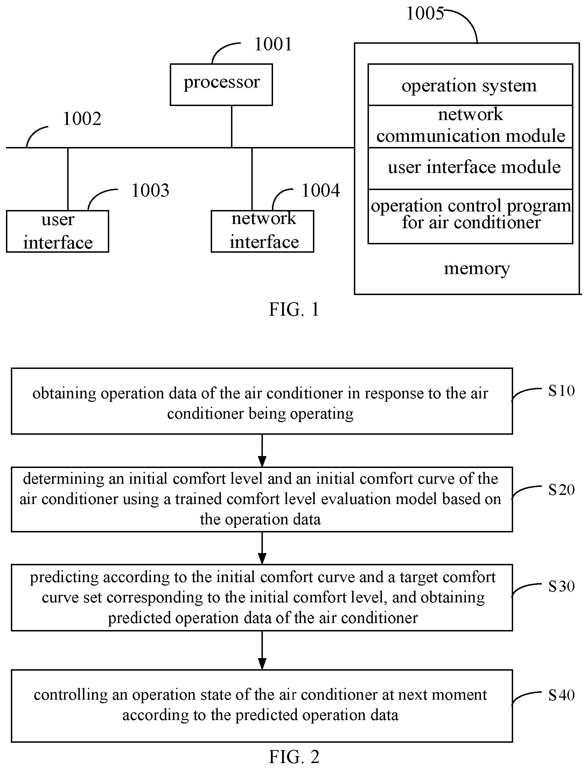

Referring to FIG. 1, FIG. 1 is a structural schematic view of an operation control device for an air conditioner in a hardware operating environment involved in an embodiment of the present application.

As shown in FIG. 1, the operation control device of the air conditioner may comprise: a processor 1001, such as a central processing unit (CPU), a communication bus 1002, a user interface 1003, a network interface 1004, and a memory 1005. The communication bus 1002 is configured to enable connection and communication between these components. The user interface 1003 may comprise a display screen and an input unit such as a keyboard. The user interface 1003 may also comprise standard wired and wireless interfaces. The network interface 1004 may comprise standard wired interfaces and wireless interfaces (such as Wireless-Fidelity, Wi-Fi). The memory 1005 may be high-speed random access memory (RAM) or stable non-volatile memory (NVM), such as a disk drive. The memory 1005 may also be a storage device independent of the aforementioned processor 1001.

Those skilled in the art will understand that the structure shown in FIG. 1 does not constitute a limitation on the operation control device of an air conditioner, and may comprise more or fewer components than shown, or combine certain components, or have different component arrangements.

As shown in FIG. 1, the memory 1005, as a storage medium, may comprise an operation system, a network communication module, a user interface module, and an operation control program for an air conditioner.

In the operation control device for the air conditioner shown in FIG. 1, the network interface 1004 is mainly used for data communication with a network server; the user interface 1003 is mainly used for data interaction with the user; the processor 1001 and memory 1005 in the operation control device for the air conditioner of the present application can be located in the operation control device for the air conditioner, and the operation control device for the air conditioner calls the operation control program for the air conditioner stored in memory 1005 by the processor 1001, and executes the operation control method for the air conditioner provided in the present application.

The present application provides an operation control method for an air conditioner. Referring to FIG. 2, FIG. 2 is a schematic flow chart of a first embodiment of an operation control method for an air conditioner according to the present application.

In an embodiment, the operation control method for the air conditioner comprises the following steps:
Step S10, obtaining operation data of the air conditioner in response to the air conditioner being operating.

It should be noted that the executing entity of the method provided in the present application can be the air conditioner device, which has functions such as data processing, data communication, and program execution. It can also be other devices with the same or similar functions; this embodiment does not limit this. For ease of explanation, this embodiment uses the controller of the air conditioner as an example.

In conventional technology, to achieve comfort control of the air conditioner, it is generally achieved by temperature control technology, humidity control technology, airflow rate control technology, and air quality control technology, etc., thus realizing the operation control of the air conditioner to improve the comfort level of users. Temperature control technology refers to controlling the cooling or heating capacity of the air conditioner to ensure the indoor temperature reaches the user's desired value within the expected time range and maintains a stable temperature, preventing excessive cooling or heating. Humidity control technology refers to controlling the humidification or dehumidification capacity of the air conditioner to maintain indoor humidity within the user's set comfort range. Currently, in actual air conditioner control, humidity control is generally coupled with temperature control for dual control, achieving humidity reduction by cooling. Airflow rate control technology refers to adjusting indoor airflow speed by controlling parameters such as the opening and closing degree of the air conditioner's vents and the direction of airflow to achieve the user's desired comfort level, such as windless technology. Air quality control technology refers to improving indoor air quality and reducing harmful substances in the air by technologies such as air filtration, negative ion generation, or UV sterilization, such as natural wind or air conditioning purification functions. The present application does not impose specific limitations on these aspects.

Regardless of the specific control technology used in air conditioners, both suffer from two major drawbacks: biased control and control solidification. In the biased control: temperature control technology primarily affects the temperature aspect for comfort, humidity control technology mainly affects the humidity aspect for comfort, and wind control technology and air quality control also affect the comfortable wind and health dimensions, respectively. Even some combined technologies that integrate these centralized control techniques for multi-dimensional joint control still have a control priority issue and cannot truly achieve comprehensive control according to complete comfort standards. Control solidification refers to the use of the same control logic for air conditioning regardless of device, location, user, or time.

These two drawbacks stem primarily from a lack of practically usable quantitative standards for measuring air conditioning comfort level (for example, traditional comfort level indicators such as PMV or SET require expensive experimental equipment or professional instruments to achieve); or because current air conditioning control logic is largely derived from expert experience and experimental simulations, failing to fully utilize the exclusive information such as the behavior habits of air conditioning users, the environmental conditions of air conditioning operation, and the reported data during air conditioning operation.

In an embodiment, the operation data of the air conditioner comprises, but is not limited to, environmental information, operating condition information, and user setting information. Environmental information comprises indoor ambient temperature, indoor ambient humidity, and outdoor thermal environment information. Operating condition information comprises fan speed, throttling element opening, and fan deflector opening. User setting information comprises user-set temperature and air conditioner operating mode. The present application does not impose specific limitations on these.

In a specific implementation, during operation, the air conditioner can collect operation data of the air conditioner at preset intervals and extract periodic features from the operation data, comprising, but not limited to, environmental information, operating condition information, and user setting information. The preset interval can be 30 seconds or 1 minute, or further can be set by the user. In this embodiment and the following embodiments, 30 seconds is used as an example.

Step S20, determining an initial comfort level and an initial comfort curve of the air conditioner using a trained comfort level evaluation model based on the operation data.

It should be noted that the trained comfort level evaluation model is configured to calculate the comfort level corresponding to the operation data uploaded by the air conditioner. In an embodiment, the trained comfort level evaluation model can be based on an improved human comfort intelligent control model (Predicted Mean Vote, PMV), mainly composed of a Lasso model and an eXtreme Gradient Boosting (XGB) model, jointly achieving the purpose of calculating the comfort level corresponding to the operation data uploaded by the air conditioner.

In specific implementation, the initial comfort level is calculated by the operation data reported by the air conditioner every 30 seconds. By calculating the initial comfort level of the air conditioner within a consecutive second preset period, and generating an initial comfort curve according to the initial comfort level within the second period. The second preset period is longer than a preset period; for example, if the preset period is 30 seconds, the second preset period can be 5 minutes. The present application does not impose specific limitations on this.

The initial comfort level corresponds to the operation data of the air conditioner at the current moment. Therefore, the initial comfort curve corresponds to the operation data of the air conditioner for the previous 5 minutes.

Step S30, predicting according to the initial comfort curve and a target comfort curve set corresponding to the initial comfort level, and obtaining predicted operation data of the air conditioner.

It should be noted that predicted operation data refers to the operational data of the air conditioner that reaches the optimal comfort level during its operation at the next moment.

The predicting according to the initial comfort curve and the target comfort curve set corresponding to the initial comfort level, and obtaining the predicted operation data of the air conditioner comprises:
calculating a similarity between the initial comfort curve and a target comfort level curve set;
determining a target predicted comfort level curve in the target comfort curve set according to the similarity; and
determining a predicted comfort level at the next moment and a predicted operation data of the air conditioner corresponding to the predicted comfort level based on the target predicted comfort level curve.

In practical implementation, due to changes in the operating parameters of the air conditioner, its corresponding comfort level will also change, and there will be differences in the comfort level curve over a period of time. In an embodiment, the comfort level curve corresponding to the initial comfort level can be extracted from a database and used as the basis for the air conditioner's operating parameters at the next moment.

The present application, based on the initial comfort level value and the comfort curves from the previous five minutes, calculates similarity in the comfort curve set of the same initial comfort level, the highest similarity curve is taken as the expected comfort curve (i.e., the target predicted comfort level curve); calculates similarity based on the operating parameters at the current moment and feasible parameter set of the air conditioner, and takes the feasible parameter with the highest similarity as the operating parameter of the air conditioner at the next moment; and calculates similarity based on the current operating parameters and feasible parameter set of the air conditioner, and takes the feasible parameter with the highest similarity as the operating parameter of the air conditioner at the next moment.

Step S40, controlling an operation state of the air conditioner at next moment according to the predicted operation data.

The present application, by obtaining the operation data of the air conditioner during operation, uses a trained comfort level evaluation model to perform comfort level evaluation according to the operation data of the air conditioner, and obtains the initial comfort level and initial comfort curve of the air conditioner at the current moment; then, based on the initial comfort curve and the target comfort curve corresponding to the initial comfort level, predicts the operation data of the air conditioner at the next moment; finally, controls the operation state of the air conditioner at the next moment according to the predicted operation data, thereby avoiding the technical problem of low comfort level in the operation control process of the air conditioner, and improving the user experience..

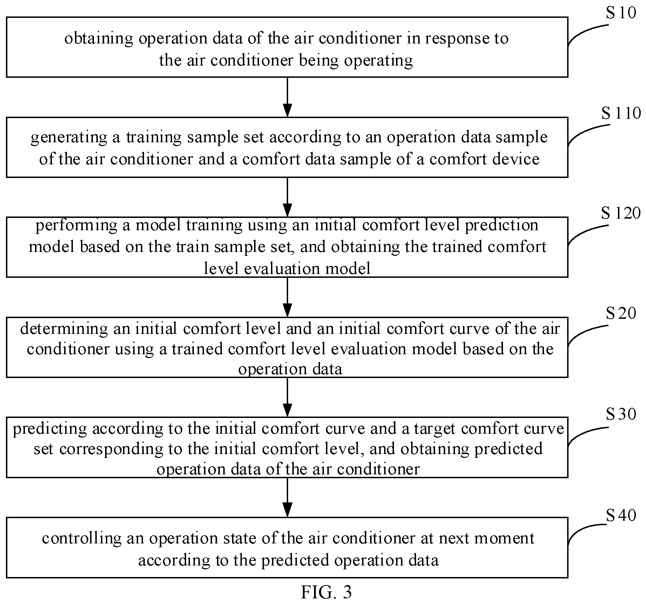

Referring to FIG. 3, FIG. 3 is a schematic flow chart of a second embodiment of an operation control method for an air conditioner according to the present application.

Based on the first embodiment mentioned above, in an embodiment, before step S20, the method further comprises:
Step S110, generating a training sample set according to an operation data sample of the air conditioner and a comfort data sample of a comfort device.

It should be noted that the comfort data sample of the comfort device comprises, but is not limited to, six indicators: air temperature, radiant temperature, air velocity, relative humidity, metabolic rate, and clothing resistance.

Step S120, performing a model training using an initial comfort level prediction model based on the training sample set, and obtaining the trained comfort level evaluation model.

It should be noted that the initial comfort level prediction model in this embodiment can be a model based on a Lasso+XGB hybrid regression algorithm. Learning the basic features of the data by Lasso, learning the residuals by XGB, and constructing the final prediction model by integrating the model training results.

The performing the model training using the initial comfort level prediction model based on the training sample set, and obtaining the trained comfort level evaluation model comprises:
performing the model training using an initial regression model based on the training sample set, and obtaining a first prediction model;
predicting a comfort level prediction value corresponding to the operation data sample according to the first prediction model;
calculating an error value between the comfort level prediction values and a comfort level actual value in the comfort data sample; and
performing the model training using the initial comfort level prediction model according to the operation data sample and the error value, and obtaining the trained comfort level evaluation model.

**In** the specific implementation, connecting the air conditioner and the PMV comfort measurement device, collecting air conditioning operation report data and comfort data reported by comfort devices in real time, using air conditioning condition information, environmental conditions, and user operation data as feature variables, and taking PMV data reported by comfort devices at corresponding times as dependent variables, and constructing a corresponding training dataset by multiple sets of experiments. Based on the constructed training dataset, using Lasso regression to fit the feature variables and PMV in the training dataset, and fitting and obtaining the corresponding Lasso model; using Lasso model to predict and obtain the PMV prediction value lasso_pmv_pred of the training data, simultaneously subtracting the predicted value from the actual PMV value to obtain the PMV prediction error lasso_pmv_error=pmv - lasso_pmv_pred; building an XGB model to learn the model representation between feature variables and lasso prediction errors in the training dataset, and obtaining the corresponding XGB model; predicting the training dataset based on the baseline onXGB model, and obtaining the predicted xgb_pred; summing up the predicted value of XGB and the predicted value of Lasso, and obtaining the final PMV predicted value pmv_pre=lasso_pmv_pre+xgb_pred; by continuous iteration, obtaining new predicted values until the loss value of the trained model is less than a certain threshold, then the trained comfort level evaluation model can be output.

The present application trains a model built using the Lasso+XGB hybrid regression algorithm, continuously iterating Lasso prediction values and XGB prediction values, thereby training the operation state that can accurately adjust the operation state of the air conditioner, and improving the user's comfort in using the air conditioner.

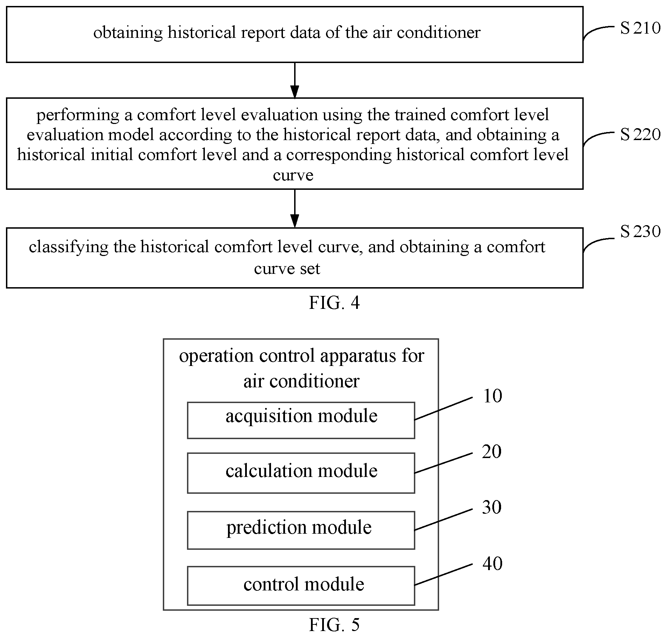

Referring to FIG. 4, FIG. 4 is a schematic flow chart of a third embodiment of an operation control method for an air conditioner according to the present application.

Based on the second embodiment described above, in an embodiment, before step S30, the method further comprises:
Step S210: obtaining historical report data of the air conditioner.
   It should be noted that the historical report data of the air conditioner comprises, but is not limited to, historical environmental information, historical operating condition information, and historical user setting information over a period of time in history.
Step S220: performing a comfort level evaluation using the trained comfort level evaluation model according to the historical report data, and obtaining a historical initial comfort level and a corresponding historical comfort level curve.

Because the air conditioners do not consider which data is effective in improving comfort when reporting data, a large amount of invalid data exists when reporting data. To reduce the amount of erroneous data and improve the efficiency of air conditioner control, the performing the comfort level evaluation using the trained comfort level evaluation model according to the historical report data, and obtaining the historical initial comfort level and the corresponding historical comfort level curve comprises:
performing data cleaning and sampling on the historical report data, and obtaining a target historical report data; and
performing the comfort level evaluation using the trained comfort level evaluation model according to the target historical report data, and obtaining the historical initial comfort level and the corresponding historical comfort level curve.

Data cleaning comprises, but is not limited to, missing value processing, outlier processing, data deduplication, data format conversion, dimensionless conversion, data unification, and error correction. The present application does not impose specific limitations on these aspects.

In specific implementation, perform data cleaning on the historical report data of the air conditioners, after obtaining clean and organized air conditioning data, based on random sampling, randomly selecting 2000 sets of device as the comfort curve generation construction set; then, based on a trained comfort level evaluation model, obtaining the comfort level curve (i.e., historical comfort level curve) for each set of device in each operating interval.

Step S230: classifying the historical comfort level curve, and obtaining a comfort curve set.

It should be noted that the basis for classifying the historical comfort level curve can be based on different heating and cooling demand, different environmental conditions, and different comfort variation demand. In specific manifestations, the extreme value range (peak or valley) of the comfort level curve can represent the heating and cooling demand, the initial comfort level of the curve can represent the environmental conditions, and the curve similarity can represent the comfort variation demand. The present application does not impose specific limitations on this.

The classifying the historical comfort level curve, and obtaining the comfort curve set comprises:
obtaining an extreme value of the historical comfort level curve, an initial comfort level of the historical comfort level curve, and a curve similarity of the historical comfort level curve;
classifying the historical comfort level curve based on the extreme value, the initial comfort level, and the curve similarity, and obtaining the comfort curve set; and
preprocessing the comfort curve set to make each comfort level curve in the comfort curve set correspond to different comfort level initial value.

In specific implementation, based on three criteria, that is, peak value or valley value of the comfort curve, curve initial comfort level, and curve similarity, categorizing the historical comfort level curves into different clusters, perform smoothing and truncation replacement operations on the curves within each cluster, and obtaining a comfort curve set corresponding to different initial comfort values.

The present application evaluates using a trained comfort level evaluation model according to the historical report data of the air conditioner, and obtains multiple historical comfort level curves; then, according to the three criteria, that is, peak value or valley value of the comfort curve, curve initial comfort level, and curve similarity, the historical comfort level curve is classified into different clusters to obtain a comfort curve set corresponding to different comfort level initial values, thus facilitating subsequent curve similarity calculation and improving the accuracy of air conditioner control at the next moment.

Furthermore, the present application further proposes a storage medium, the storage medium stores an operation control program for an air conditioner, and the operation control program for the air conditioner implements the operation control method for the air conditioner described above when executed by a processor.

Since the storage medium employs all the technical solutions of the above embodiments, it possesses at least all the beneficial effects brought about by the technical solutions of the above embodiments, which will not be elaborated upon further here.

Referring to FIG. 5, FIG. 5 is a structural block diagram of the first embodiment of the operation control apparatus for the air conditioner according to the present application.

As shown in FIG.5, the operation control apparatus for the air conditioner proposed in the present application comprises:
an acquisition module 10, configured to obtain operation data of the air conditioner in response to the air conditioner being operating;
a calculation module 20, configured to determine an initial comfort level and an initial comfort curve of the air conditioner using a trained comfort level evaluation model based on the operation data;
a prediction module 30, configured to predict according to the initial comfort curve and a target comfort curve set corresponding to the initial comfort level, and obtain predicted operation data of the air conditioner; and
a control module 40, configured to control an operation state of the air conditioner at next moment according to the predicted operation data.

In an embodiment, the calculation module 20 is further configured for generating a training sample set according to an operation data sample of the air conditioner and a comfort data sample of a comfort device; and performing a model training using an initial comfort level prediction model based on the training sample set, and obtaining the trained comfort level evaluation model.

In an embodiment, the calculation module 20 is further configured for performing the model training using an initial regression model based on the training sample set, and obtaining a first prediction model; predicting a comfort level prediction value corresponding to the operation data sample according to the first prediction model; calculating an error value between the comfort level prediction values and a comfort level actual value in the comfort data sample; and performing the model training using the initial comfort level prediction model according to the operation data sample and the error value, and obtaining the trained comfort level evaluation model.

In an embodiment, the prediction module 30 is further configured for obtaining historical report data of the air conditioner; performing a comfort level evaluation using the trained comfort level evaluation model according to the historical report data, and obtaining a historical initial comfort level and a corresponding historical comfort level curve; and classifying the historical comfort level curve, and obtaining a comfort curve set.

In an embodiment, the prediction module 30 is further configured for performing data cleaning and sampling on the historical report data, and obtaining a target historical report data; and performing the comfort level evaluation using the trained comfort level evaluation model according to the target historical report data, and obtaining the historical initial comfort level and the corresponding historical comfort level curve.

In an embodiment, the prediction module 30 is further configured for obtaining an extreme value of the historical comfort level curve, an initial comfort level of the historical comfort level curve, and a curve similarity of the historical comfort level curve; classifying the historical comfort level curve based on the extreme value, the initial comfort level, and the curve similarity, and obtaining the comfort curve set; and preprocessing the comfort curve set to make each comfort level curve in the comfort curve set correspond to different comfort level initial value.

In an embodiment, the prediction module 30 is further configured for calculating a similarity between the initial comfort curve and a target comfort level curve set; determining a target predicted comfort level curve in the target comfort curve set according to the similarity; and determining a predicted comfort level at the next moment and a predicted operation data of the air conditioner corresponding to the predicted comfort level based on the target predicted comfort level curve.

The present application, by obtaining the operation data of the air conditioner during operation, uses a trained comfort level evaluation model to perform comfort level evaluation according to the operation data of the air conditioner, and obtains the initial comfort level and initial comfort curve of the air conditioner at the current moment; then, based on the initial comfort curve and the target comfort curve corresponding to the initial comfort level, predicts the operation data of the air conditioner at the next moment; finally, controls the operation state of the air conditioner at the next moment according to the predicted operation data, thereby avoiding the technical problem of low comfort level in the operation control process of the air conditioner, and improving the user experience.

Although the steps in the flowchart of the present application's embodiments are shown sequentially according to the arrows, these steps are not necessarily executed in the order indicated by the arrows. Unless explicitly stated herein, there is no strict order restriction for the execution of these steps; they can be executed in other orders. Furthermore, at least some of the steps in the diagram may comprise multiple sub-steps or multiple stages. These sub-steps or stages are not necessarily executed simultaneously, but can be executed at different times. Their execution order is not necessarily sequential, but can be performed alternately or in turn with other steps or at least some of the sub-steps or stages of other steps.

The above is merely illustrative and does not constitute any limitation on the technical solution of the present application. In specific applications, those skilled in the art can configure it according to their needs, and the present application does not impose any restrictions in this regard.

It should be noted that the workflow described above is merely illustrative and does not limit the scope of the present application. In practical applications, those skilled in the art can select some or all of it to achieve the purpose of this embodiment according to actual needs, and no restrictions are imposed here.

In addition, technical details not described in detail in an embodiment can be found in the operation control method for the air conditioner provided in any embodiment of the present application, and will not be repeated here.

Furthermore, it should be noted that in this document, the terms "comprising," "comprising" or any other variations thereof are intended to cover non-exclusive inclusion, such that a process, method, article, or system that comprises a list of elements comprises not only those elements but also other elements not expressly listed, or elements inherent to such a process, method, article, or system. Without further limitations, an element defined by the phrase "comprising a/an..." does not exclude the presence of other identical elements in the process, method, article, or system that comprises that element.

The sequence numbers of the embodiments described above are merely descriptive and do not represent the superiority or inferiority of the embodiments.

By the above description of the embodiments, those skilled in the art can clearly understand that the methods of the above embodiments can be implemented by means of software plus necessary general-purpose hardware platforms. Certainly, they can also be implemented by hardware, but in many cases the former is a preferred implementation method. Based on this understanding, the technical solution of the present application, in essence or the part that contributes to the related art, can be embodied in the form of a software product. This computer software product is stored in a storage medium (such as read-only memory (ROM)/RAM, magnetic disk, optical disk) and comprises several instructions to cause a terminal device (which may be a mobile phone, computer, server, or network device, etc.) to execute the methods described in the various embodiments of the present application.

The above are merely some embodiments of the present application and do not limit the scope of the present application. Any equivalent structural or procedural transformations made using the content of the present application's specification and drawings, or direct or indirect applications in other related technical fields, are similarly comprised within the scope of the present application.

## Claims

1. An operation control method for an air conditioner, comprising:
obtaining operation data of an air conditioner in response to the air conditioner being operating;
determining an initial comfort level and an initial comfort curve of the air conditioner using a trained comfort level evaluation model based on the operation data;
predicting based on the initial comfort curve and a target comfort curve set corresponding to the initial comfort level, to obtain predicted operation data of the air conditioner; and
controlling an operation state of the air conditioner at next moment according to the predicted operation data.

2. The operation control method for the air conditioner according to claim 1, wherein before the determining the initial comfort level and the initial comfort curve of the air conditioner using the trained comfort level evaluation model based on the operation data, the method further comprises:
generating a training sample set according to an operation data sample of the air conditioner and a comfort data sample of a comfort device; and
performing a model training using an initial comfort level prediction model based on the training sample set, to obtain the trained comfort level evaluation model.

3. The operation control method for the air conditioner according to claim 2, wherein the performing the model training using the initial comfort level prediction model based on the training sample set, and obtaining the trained comfort level evaluation model comprises:
performing model training using an initial regression model based on the training sample set, to obtain a first prediction model;
predicting a comfort level prediction value corresponding to the operation data sample based on the first prediction model;
calculating an error value between the comfort level prediction value and a comfort level actual value in the comfort data sample; and
performing model training using the initial comfort level prediction model based on the operation data sample and the error value, to obtain the trained comfort level evaluation model.

4. The operation control method for the air conditioner according to any one of claims 1 to 3, wherein before the predicting based on the initial comfort curve and the target comfort curve set corresponding to the initial comfort level, to obtain the predicted operation data of the air conditioner, the method further comprises:
obtaining historical report data of the air conditioner;
performing a comfort level evaluation using the trained comfort level evaluation model based on the historical report data, to obtain a historical initial comfort level and a corresponding historical comfort level curve; and
classifying the historical comfort level curve, to obtain a comfort curve set.

5. The operation control method for the air conditioner according to claim 4, wherein the performing the comfort level evaluation using the trained comfort level evaluation model based on the historical report data, to obtain the historical initial comfort level and the corresponding historical comfort level curve comprises:
performing data cleaning and sampling on the historical report data, to obtain a target historical report data; and
performing the comfort level evaluation using the trained comfort level evaluation model based on the target historical report data, to obtain the historical initial comfort level and the corresponding historical comfort level curve.

6. The operation control method for the air conditioner according to claim 4, wherein the classifying the historical comfort level curve, to obtain the comfort curve set comprises:
obtaining an extreme value of the historical comfort level curve, an initial comfort level of the historical comfort level curve, and a curve similarity of the historical comfort level curve;
classifying the historical comfort level curve based on the extreme value, the initial comfort level, and the curve similarity, to obtain the comfort curve set; and
preprocessing the comfort curve set to make each comfort level curve in the comfort curve set correspond to different comfort level initial value.

7. The operation control method for the air conditioner according to claim 1, wherein the predicting based on the initial comfort curve and the target comfort curve set corresponding to the initial comfort level, to obtain the predicted operation data of the air conditioner comprises:
calculating a similarity between the initial comfort curve and a target comfort level curve set;
determining a target predicted comfort level curve in the target comfort curve set based on the similarity; and
determining a predicted comfort level at the next moment and predicted operation data of the air conditioner corresponding to the predicted comfort level based on the target predicted comfort level curve.

8. An operation control apparatus for an air conditioner, comprising:
an acquisition module, configured to obtain operation data of the air conditioner in response to the air conditioner being operating;
a calculation module, configured to determine an initial comfort level and an initial comfort curve of the air conditioner using a trained comfort level evaluation model based on the operation data;
a prediction module, configured to predict based on the initial comfort curve and a target comfort curve set corresponding to the initial comfort level, and obtain predicted operation data of the air conditioner; and
a control module, configured to control an operation state of the air conditioner at next moment based on the predicted operation data.

9. An operation control device for an air conditioner, comprising: a memory, a processor, and an operation control program for the air conditioner stored on the memory and executable on the processor, and the operation control program for the air conditioner is configured to implement the operation control method for the air conditioner according to any one of claims 1 to 7.

10. A storage medium, wherein the storage medium stores an operation control program for an air conditioner, and the operation control program for the air conditioner implements an operation control method for the air conditioner according to any one of claims 1 to 7 when executed by a processor.
